# NEUE EUROPÄISCHE PATENTSCHRIFT

(11) **EP 3 400 767 B2**
(45) Veröffentlichungstag und Bekanntmachung des Hinweises auf die Entscheidung über den Einspruch: **14.02.2024**
(45) Hinweis auf die Patenterteilung: 14.10.2020
(21) Anmeldenummer: 18171017.9
(22) Anmeldetag: 07.05.2018
(51) Int. Cl.: A01B 69/00, G05D 1/02

(54) **LANDWIRTSCHAFTLICHE ARBEITSMASCHINE**
AGRICULTURAL MACHINE
MACHINE AGRICOLE

(30) Priorität: 10.05.2017 DE 102017110106
(43) Veröffentlichungstag der Anmeldung: 14.11.2018
(73) Patentinhaber: CLAAS Tractor S.A.S., 78141 Vélizy-Villacoublay Cedex (FR)
(72) Erfinder: Cabrespine, Arnaud, F-63530 Sayat (FR); Noyer, Pierre, 81739 München (DE); Ehlert, Christian, 33719 Bielefeld (DE); Wieckhorst, Jan Carsten, 33098 Paderborn (DE); Armbrust, Christopher, 49080 Osnabrück (DE); Weiland, Kalle, Bielefeld (DE); Schoch, Bernd, 33334 Gütersloh (DE); Maier, Josef, 84169 Altfraunhofen (DE)
(74) Vertreter: CLAAS Gruppe

(56) Entgegenhaltungen:
- EP-A1- 2 987 396
- EP-A1- 3 301 625
- WO-A1-2014/177755
- CN-A- 106 572 630
- DE-A1-102012 107 551
- DE-A1-102013 112 294
- DE-A1-102014 102 489
- DE-A1-102016 216 740
- US-A1- 2014 195 126
- US-A1- 2015 217 780
- US-B2- 8 583 326
- "Tractors and machinery for agriculture and forestry-Serial control and communications data network part 6 Virtual terminal", ISO 11783-6, 1 July 2014 (2014-07-01), pages 1 - 320
- ITEC-VIDEO, 18 July 2016 (2016-07-18), Retrieved from the Internet <URL:https://www.voutube.com/watch?v=f4X6k w3iPIQ>
- "Tractors and machinery for agriculture and forestry - Serial control and communications data network - Part 10: Task controller and management information system data interchange", ISO 11783-10, 15 September 2015 (2015-09-15), pages 1 - 214

## Beschreibung

Die Erfindung betrifft eine landwirtschaftliche Arbeitsmaschine nach dem Oberbegriff des Anspruchs 1.

Aus dem Stand der Technik (US 8,583,326 B2) ist eine landwirtschaftliche Arbeitsmaschine in Form eines Traktors bekannt, die ein satellitengestütztes Lenksystem aufweist. Das satellitengestützte Lenksystem ist Teil eines Fahrerassistenzsystems und ermöglicht eine kontinuierliche Anpassung der Fahrroute. Zur Einrichtung eines derartigen satellitengestützten Lenksystems sind gemäß Stand der Technik menügeführte Einrichtungsassistenten bekannt, bei denen die Bedienperson eine Vielzahl von detaillierten Daten eingeben muss. Beispielsweise muss die Bedienperson einen Offset des Satellitenempfängers auf der Arbeitsmaschine oder einen Wenderadius der Arbeitsmaschine eingeben und entsprechend vorher exakt ermitteln oder kennen.

Auch bei der menügeführten Einrichtung mittels eines solchen sogenannten Einrichtungsassistenten ist jedoch eine sorgfältige Einarbeitung der Bedienperson in die jeweilige Dokumentation notwendig, da ansonsten eine zuverlässige Funktion des Lenksystems nicht gewährleistet ist. Dieser Aufwand ist auch bei der Einrichtung bzw. Programmierung eines Sequenz-Managementsystems für ein Vorgewende notwendig.

Der Erfindung liegt das Problem zugrunde, eine landwirtschaftliche Arbeitsmaschine mit einem Einrichtungsassistenten bereitzustellen, mit welchem ein Fahrerassistenzsystem einfacher bedienbar ist.

Das obige Problem wird bei einer landwirtschaftlichen Arbeitsmaschine gemäß dem Oberbegriff von Anspruch 1 durch die Merkmale des kennzeichnenden Teils von Anspruch 1 gelöst.

Bei der vorschlagsgemäßen landwirtschaftlichen Arbeitsmaschine handelt es sich insbesondere um einen Traktor. Grundsätzlich ist die vorschlagsgemäße Lösung auch auf jedwede andere landwirtschaftliche Arbeitsmaschine, beispielsweise einen Mähdrescher oder Feldhäcksler, anwendbar. Die landwirtschaftliche Arbeitsmaschine weist ein Fahrerassistenzsystem auf, womit ein System gemeint ist, das den Fahrer bzw. die Bedienperson der landwirtschaftlichen Arbeitsmaschine bei der Bedienung derselben zur Durchführung und/oder während der Durchführung des landwirtschaftlichen Arbeitsauftrags unterstützt. Die Unterstützung kann sich dabei auf das Fahren und/oder Lenken der landwirtschaftlichen Arbeitsmaschine beziehen, aber auch auf die Ausführung von festgelegten Sequenzen von Bedienschritten bzw. Befehlen (Sequenz-Management), insbesondere für ein Vorgewende. Eine solche Vorgewendesequenz umfasst insbesondere auch Fahr- und/oder Lenkbefehle.

Wesentlich bei der vorschlagsgemäßen landwirtschaftlichen Arbeitsmaschine ist, dass der Einrichtungsassistent, vorzugsweise dialogbasiert und/oder sprachbasiert, in Abhängigkeit eines landwirtschaftlichen Arbeitsauftrags konfigurierbar ist. Eine Bedienperson gibt dem Fahrerassistenzsystem also zunächst über die Ein-/Ausgabeeinheit einen konkreten landwirtschaftlichen Arbeitsauftrag vor, wählt diesen insbesondere aus mehreren systemseitig vorgegebenen landwirtschaftlichen Arbeitsaufträgen aus, woraufhin dann automatisch eine arbeitsauftragsspezifische Konfiguration des Einrichtungsassistenten erfolgt, insbesondere der Folgeschritte bzw. Eingabemasken des Einrichtungsassistenten. Der Einrichtungsassistent ist dadurch so konfiguriert, dass die Bedienperson nur noch notwendige Einstellungen vornehmen muss und/oder systemseitig vorgeschlagene Einstellungen direkt, das heißt ohne weitere Eingaben, übernehmen, das heißt bestätigen, kann.

Die vorschlagsgemäße landwirtschaftliche Arbeitsmaschine hat durch das spezielle Fahrerassistenzsystem den Vorteil, dass die Einrichtung bzw. Einstellung des Fahrerassistenzsystems für die Bedienperson durch eine arbeitsauftragsspezifische Konfiguration des Einrichtungsassistenten und insbesondere eine natürlichsprachige und/oder dialogbasierte Menüführung gegenüber dem Stand der Technik vereinfacht wird.

Erfindungsgemäß lässt sich auf diese Weise als Bestandteil des Fahrerassistenzsystems ein satellitengestütztes Lenksystem einrichten bzw. einstellen. Ergänzend oder alternativ hierzu lässt sich auch ein Sequenz-Managementsystem des Fahrerassistenzsystems mit diesem Einrichtungsassistenten einrichten. Bei dem Sequenz-Managementsystem handelt es sich insbesondere um ein solches für ein Vorgewende (Vorgewendesequenz-Managementsystem), bei dem die Sequenz von Bedienschritten bzw. Befehlen insbesondere verschiedene Fahrbefehle (Bremsen und Beschleunigen) und Lenkbefehle sowie Steuerungsbefehle für interne bzw. mit der landwirtschaftlichen Arbeitsmaschine fest verbundene und/oder externe bzw. an die landwirtschaftliche Arbeitsmaschine anbaubare Arbeitsaggregate zur Durchführung oder Unterstützung eines landwirtschaftlichen Arbeitsauftrags umfasst. Ein entsprechendes Sequenz-Management für ein Vorgewende erlaubt damit einen automatischen Fahrtrichtungswechsel der landwirtschaftlichen Arbeitsmaschine zur Entlastung der Bedienperson. Grundsätzlich lassen sich auch ergänzend oder alternativ hierzu weitere untergeordnete Systeme der landwirtschaftlichen Arbeitsmaschine bzw. des Fahrerassistenzsystems mit dem arbeitsauftragsspezifisch konfigurierbaren Einrichtungsassistenten einrichten, beispielsweise ein Section Control-System (System zur automatischen Teilbreitenschaltung), ein System zur Steuerung und/oder Regelung einer elektronischen Deichsel, ein System zum autonomen Arbeiten und/oder ein Abstandskontrollsystem.

Erfindungsgemäß ermöglicht der Einrichtungsassistent die Auswahl eines Arbeitsauftrags aus einer Gruppe von Arbeitsaufträgen durch die Bedienperson und nimmt basierend auf dem ausgewählten Arbeitsauftrag eine Grundkonfiguration des Fahrerassistenzsystems vor. Weiter ist erfindungsgemäß vorgesehen, dass der Einrichtungsassistent basierend auf dem ausgewählten Arbeitsauftrag eine Grundkonfiguration des Lenksystems, Sequenz-Managementsystems, Section Control-Systems, Systems zur Steuerung und/oder Regelung einer elektronischen Deichsel, Systems zum autonomen Arbeiten, Abstandskontrollsystems etc. vornimmt.

Landwirtschaftliche Arbeitsaufträge, die als Basis für die Konfiguration des Einrichtungsassistenten des Fahrerassistenzsystems zugrunde gelegt werden können, sind in den Ansprüchen 2 bis 4 definiert. Anspruch 2 definiert dabei Arbeitsaufträge, die dem Arbeitstyp "Ackerbau" untergeordnet sind. Anspruch 3 definiert Arbeitsaufträge, die dem Arbeitstyp "Futterernte" untergeordnet sind, und Anspruch 4 definiert Arbeitsaufträge, die dem Arbeitstyp "Sonstige Arbeiten" untergeordnet sind.

Erfindungsgemäß erzeugt der Einrichtungsassistent basierend auf der Grundkonfiguration mindestens eine Eingabemaske, die von der Ein-/Ausgabeeinheit angezeigt wird. Diese Eingabemaske ermöglicht dann die Auswahl mindestens einer Einstellung zur rechnergestützten Planung einer Fahrroute und/oder einer Sequenz von Bedienschritten aus einer Gruppe von Einstellungen. Alternativ oder zusätzlich ermöglicht die mindestens eine Eingabemaske die bedienerseitige Bestätigung mindestens einer vom Einrichtungsassistenten vorgegebenen, der Grundkonfiguration untergeordneten arbeitsauftragsspezifischen Einstellung zur rechnergestützten Planung einer Fahrroute und/oder einer Sequenz von Bedienschritten. Entsprechendes gilt auch für die Auswahl und/oder bedienerseitige Bestätigung mindestens einer Einstellung zur rechnergestützten Anpassung des Section Control-Systems, Systems zur Steuerung und/oder Regelung einer elektronischen Deichsel, Systems zum autonomen Arbeiten, Abstandskontrollsystems etc.

Die der Grundkonfiguration untergeordnete arbeitsauftragsspezifische Einstellung kann eine Einstellung sein, die gewählt ist aus der Gruppe umfassend eine Korrektursignaleinstellung, die Auswahl und Konfiguration eines Arbeitsaggregats zur Durchführung oder Unterstützung des landwirtschaftlichen Arbeitsauftrags, die Auswahl und Konfiguration eines Geschwindigkeitssensors, die Auswahl und/oder Konfiguration eines GPS- oder Georeferenzsystems, die Auswahl und/oder Konfiguration einer Fahrroute und/oder die Auswahl und/oder Konfiguration einer Vorgewendesequenz (Anspruch 5). Alternativ oder zusätzlich ist eine solche Einstellung auch von der Ein-/Ausgabeeinheit anzeigbar. Vorzugsweise zeigt der Einrichtungsassistent für die jeweilige der Grundkonfiguration untergeordnete arbeitsauftragsspezifische Einstellung mehrere Auswahlmöglichkeiten an (Anspruch 6).

Die Ansprüche 7 bis 9 definieren, dass der Bedienperson als einstellbares Arbeitsaggregat ein Arbeitsaggregat angezeigt wird, das einem landwirtschaftlichen Arbeitsauftrag zugeordnet ist aus der Gruppe umfassend einen der zuvor genannten landwirtschaftlichen Arbeitsaufträge, die auch in den Ansprüchen 2 bis 4 definiert sind. Für den Arbeitsauftrag "Grund-/Bodenbearbeitung" wird als zugeordnetes Arbeitsaggregat beispielsweise ein Pflug und/oder ein Grubber angezeigt. Für den landwirtschaftlichen Arbeitsauftrag "Grünlandbewirtschaftung" und/oder "Ernten" wird beispielsweise als korrespondierendes Arbeitsaggregat ein Heuwender und/oder eine Ballenpresse angezeigt. Dies sollen nur einige Beispiele für einem landwirtschaftlichen Arbeitsauftrag zugeordnete Arbeitsaggregate sein.

Der Einrichtungsassistent ermöglicht der Bedienperson vorzugsweise auch eine Fahrroute und/oder Sequenz von Bedienschritten bzw. Befehlen von einer externen Datenquelle zu laden und/oder eine solche aufzuzeichnen und/oder zu editieren. Eine externe Datenquelle kann beispielsweise ein USB-Stick, ein Rechenzentrum o. dgl. sein. Eine Aufzeichnung und/oder ein Editieren kann auf der externen Datenquelle oder auf einem internen Datenspeicher erfolgen (Anspruch 10). Die Sequenz von Bedienschritten bzw. Befehlen ist insbesondere eine Vorgewendesequenz (Anspruch 11).

Bei der Ausgestaltung gemäß Anspruch 12 weist die Ein-/Ausgabeeinheit einen Touchscreen auf, wobei der Einrichtungsassistent die Auswahl des Arbeitsauftrags und/oder der arbeitsauftragsspezifischen Einstellung symbolbasiert und/oder bildbasiert und/oder textbasiert anzeigt.

Im Folgenden wird die Erfindung anhand einer lediglich Ausführungsbeispiele darstellenden Zeichnung näher erläutert. In der Zeichnung zeigt
- Fig. 1: eine schematische Draufsicht auf eine vorschlagsgemäße landwirtschaftliche Arbeitsmaschine während der Durchführung eines landwirtschaftlichen Arbeitsauftrags,
- Fig. 2: eine schematische Seitenansicht einer vorschlagsgemäßen landwirtschaftlichen Arbeitsmaschine während des Einrichtens eines Fahrerassistenzsystems,
- Fig. 3: eine schematische Darstellung des grundsätzlichen Ablaufs einer interaktiven Einrichtung des Fahrerassistenzsystems der landwirtschaftlichen Arbeitsmaschine aus Fig. 1 oder Fig. 2 und
- Fig. 4: eine schematische Darstellung des grundsätzlichen Ablaufs einer interaktiven Einrichtung eines Vorgewendesequenz-Managementsystems als Teil des Fahrerassistenzsystems der landwirtschaftlichen Arbeitsmaschine aus Fig. 1 oder Fig. 2.

Die vorschlagsgemäße landwirtschaftliche Arbeitsmaschine 1 ermöglicht eine automatische arbeitsauftragsspezifische Konfiguration eines Einrichtungsassistenten 2 eines Fahrerassistenzsystems 3. So kann eine Bedienperson dem Fahrerassistenzsystem 3 einen landwirtschaftlichen Arbeitsauftrag vorgeben, wodurch der Einrichtungsassistent 2 entsprechend angepasst wird und die Bedienperson nur noch unbedingt notwendige Einstellungen vornehmen muss.

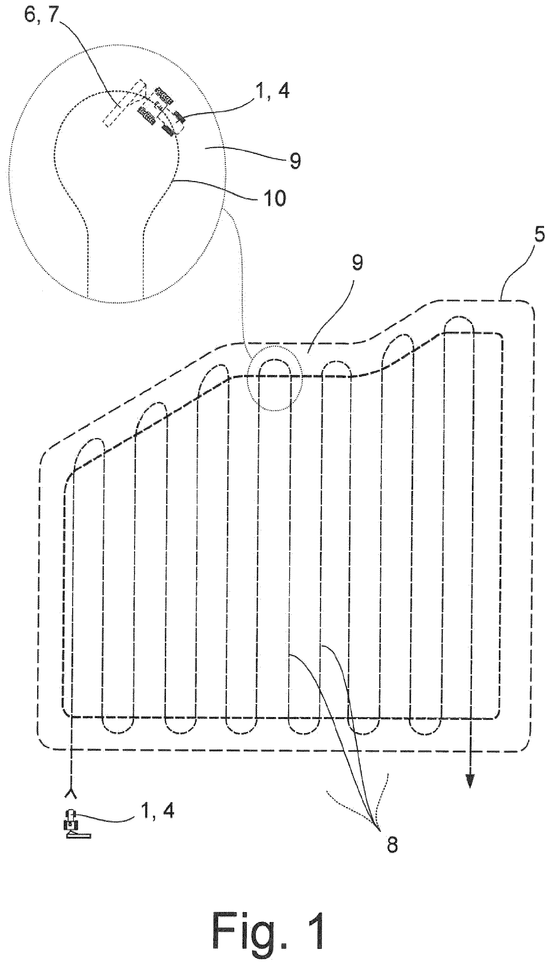

In Fig. 1 ist dargestellt, wie eine landwirtschaftliche Arbeitsmaschine 1, hier und vorzugsweise ein Traktor 4, ein Feld 5 aberntet. Das abzuerntende Erntegut ist hier Gras, weshalb der Traktor 4 als angebautes Arbeitsaggregat 6 einen Mähbalken 7 aufweist. Das Feld 5 ist mit entsprechenden parallelen Fahrspuren 8 dargestellt, denen die landwirtschaftliche Arbeitsmaschine 1 folgt. Die parallelen Fahrspuren 8 sind im Bereich des Vorgewendes 9 hier und vorzugsweise über eine Ω-förmige Fahrspur 10 verbunden. Bei der Durchfahrt des Vorgewendes 9 entlang der Ω-förmigen Fahrspur 10 führt die landwirtschaftliche Arbeitsmaschine 1 eine Vielzahl von automatisch ablaufenden Schritten bzw. Befehlen aus, die einen automatischen Fahrtrichtungswechsel der landwirtschaftlichen Arbeitsmaschine 1 ermöglichen. Gesteuert werden diese Schritte bzw. Befehle von einem Sequenz-Managementsystem, das für jeden Fahrtrichtungswechsel dieselbe Sequenz von gespeicherten Bedienschritten bzw. Befehlen ausführt, um die Bedienperson zu entlasten.

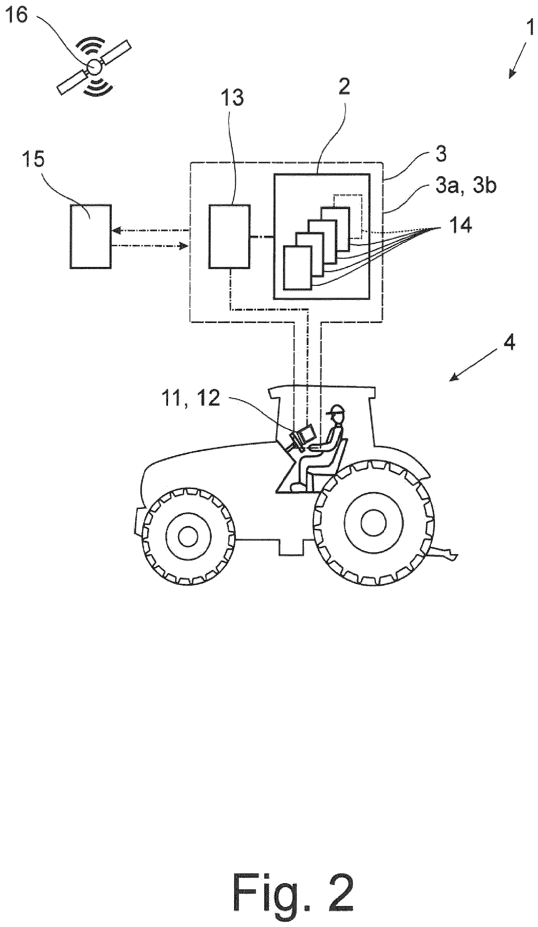

Die Einrichtung eines Fahrerassistenzsystems 3 mit einem entsprechenden satellitengestützten Lenksystem 3a, Sequenz-Managementsystem 3b, Section Control-Syste, System zur Steuerung und/oder Regelung einer elektronischen Deichsel, System zum autonomen Arbeiten und/oder Abstandskontrollsystem erfolgt mittels des Einrichtungsassistenten 2, der schematisch in Fig. 2 dargestellt ist.

Der Einrichtungsassistent 2 kann von der Bedienperson über eine Ein-/Ausgabeeinheit 11 aufgerufen werden, die Bestandteil des Fahrerassistenzsystems 3 ist. Die Ein-/Ausgabeeinheit 11 verfügt über hier nicht dargestellte virtuelle Bedienelemente, beispielsweise virtuelle Tasten, und weist zu diesem Zweck eine Touchscreen 12 auf. Ein Touchscreen 12 ermöglicht hier und vorzugsweise auch, dass der Einrichtungsassistent 2 die Auswahl des Arbeitsauftrags und/oder der arbeitsauftragsspezifischen Einstellung symbolbasiert, bildbasiert und/oder textbasiert anzeigt und eine Auswahl bzw. Bestätigung durch die Bedienperson durch Drücken der entsprechenden Symbole, Bilder oder Textfelder erlaubt. Darüber lassen sich durch die Bedienperson einen landwirtschaftlichen Arbeitsauftrag betreffende Einstellungen vornehmen und den vorzunehmenden und/oder vorgenommenen Einstellungen entsprechende Informationen anzeigen.

Das Fahrerassistenzsystem 3 bzw. die Ein-/Ausgabeeinheit 11 weist ferner einen Mikroprozessor 13 auf, der die arbeitsauftragsspezifische Konfiguration des Einrichtungsassistenten 2 und die Einrichtung des Fahrerassistenzsystems 3 bewirkt. Wird von der Bedienperson ein landwirtschaftlicher Arbeitsauftrag vorgegeben, der beispielsweise vom Einrichtungsassistenten 2 angezeigt wird, wählt der Mikroprozessor 13 aus einer Gruppe von vorkonfigurierten Speicherpaketen 14 ein dem landwirtschaftlichen Arbeitsauftrag entsprechendes Speicherpaket 14 auf, wodurch der Einrichtungsassistent 2 soweit konfiguriert wird, dass er basierend auf dem ausgewählten Arbeitsauftrag eine Grundkonfiguration des Fahrerassistenzsystems 3 bzw. des Lenksystems 3a, des Sequenz-Managementsystems 3b etc. vornehmen kann. Der Einrichtungsassistent 2 ermöglicht es der Bedienperson ferner, eine Fahrroute und/oder Sequenz von Bedienschritten bzw. Befehlen, insbesondere eine Vorgewendesequenz, die dem landwirtschaftlichen Arbeitsauftrag entspricht, von einer externen Datenquelle 15 zu laden. Grundsätzlich ist es mit dem vorschlagsgemäß vorgesehenen Fahrerassistenzsystem 3 auch möglich, eine arbeitsauftragsspezifische Fahrroute und/oder Sequenz von Bedienschritten bzw. Befehlen aufzuzeichnen und/oder zu editieren. Die aufgezeichneten und/oder editierten Daten können dann im Fahrerassistenzsystem 3 der landwirtschaftlichen Arbeitsmaschine 1 und/oder auf der externen Datenquelle 15 abgelegt werden, um sie für einen nachfolgend durchzuführenden landwirtschaftlichen Arbeitsauftrag wieder abrufen zu können.

Der dem Fahrerassistenzsystem 3 bzw. dem Einrichtungsassistenten 2 vorgebbare Arbeitsauftrag kann beispielsweise ein landwirtschaftlicher Arbeitsauftrag sein, der aus der Gruppe gewählt ist umfassend "Grund-/Bodenbearbeitung", "Säen", "Pflanzen", "Pflanzenschutz", "Düngen", "Gülle und Dung", "Ernten", "Stoppelsturz" und/oder eine Kombination daraus. Diese Arbeitsaufträge sind dem Arbeitstyp "Ackerbau" untergeordnet. Der landwirtschaftliche Arbeitsauftrag kann auch aus der Gruppe gewählt sein umfassend "Grünlandbewirtschaftung", "Ernten", "Grünlandpflege", "Silage" und/oder eine Kombination daraus. Diese Arbeitsaufträge sind dem Arbeitstyp "Futterernte" untergeordnet. Schließlich kann der landwirtschaftlicher Arbeitsauftrag auch gewählt sein aus der Gruppe umfassend "Baustelle", "Materialhandhabung", "Forstarbeit", "Transport", "Kommunale Arbeiten" und/oder eine Kombination daraus. Diese Arbeitsaufträge sind dem Arbeitstyp "Sonstige Arbeiten" untergeordnet. Es sei darauf hingewiesen, dass der Begriff "landwirtschaftlicher Arbeitsauftrag" all die vorgenannten Arbeitsaufträge umfasst und entsprechend weit zu verstehen ist. Im vorliegenden Ausführungsbeispiel, das in Fig. 1 dargestellt ist, wird als übergeordneter Arbeitstyp die Futterernte durchgeführt, wobei der konkrete Arbeitsauftrag hier das Ernten ist. Als entsprechendes zugeordnetes Arbeitsaggregat 6 zur Durchführung des landwirtschaftlichen Arbeitsauftrags wird hier ein Mähbalken 7 verwendet.

Der Einrichtungsassistent 2 erzeugt basierend auf der arbeitsauftragsspezifischen Grundkonfiguration mindestens eine Eingabemaske, die von der Ein-Ausgabeeinheit 11 angezeigt wird. Über die Eingabemaske oder Eingabemasken (hier nicht dargestellt) nimmt die Bedienperson der Grundkonfiguration des Fahrerassistenzsystems 3 untergeordnete arbeitsauftragsspezifische Einstellungen zur rechnergestützten Planung einer Fahrroute und/oder einer Sequenz von Bedienschritten, vorzugsweise einer Vorgewendesequenz, vor und/oder bestätigt eine solche Einstellung, die systemseitig vorgegeben wird. Dabei ist hier und vorzugsweise vorgesehen, dass als der Grundkonfiguration untergeordnete arbeitsauftragsspezifische Einstellung eine Einstellung aus der Gruppe umfassend eine Korrektursignaleinstellung, die Auswahl und/oder Konfiguration eines Arbeitsaggregats 6 zur Durchführung oder Unterstützung des landwirtschaftlichen Arbeitsauftrags, die Auswahl und/oder Konfiguration eines Geschwindigkeitssensors, die Auswahl und/oder Konfiguration eines GPS- oder Georeferenzsystems 16, die Auswahl und/oder Konfiguration einer Fahrroute und/oder die Auswahl und/oder Konfiguration einer Vorgewendesequenz auswählbar und/oder von der Ein-/Ausgabeeinheit 11 anzeigbar ist.

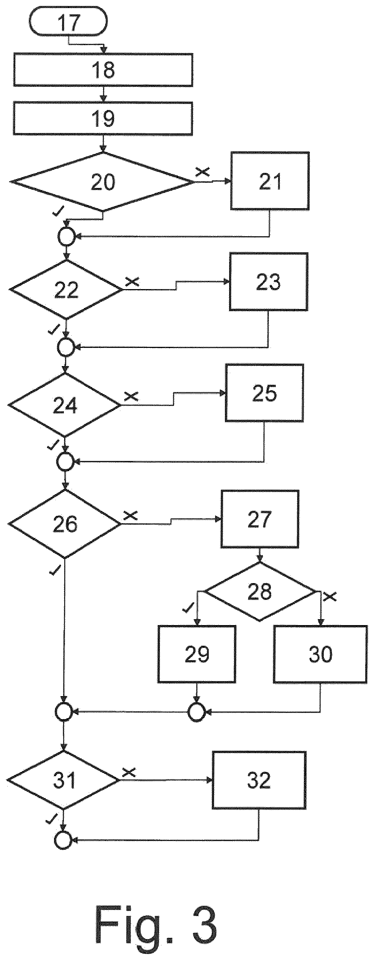

In Fig. 3 ist als Flussdiagramm schematisch der Ablauf einer interaktiven Einrichtung des Fahrerassistenzsystems 3 der landwirtschaftlichen Arbeitsmaschine 1 aus Fig. 1 oder Fig. 2 dargestellt. Nach dem Start 17 der Einrichtungsroutine des Einrichtungsassistenten 2 öffnet sich auf dem Touchscreen 12 ein Fenster 18 zur Auswahl eines landwirtschaftlichen Arbeitsauftrags. Anschließend wird eine automatische Konfiguration 19 des Einrichtungsassistenten 2 in Abhängigkeit des zuvor festgelegten Arbeitsauftrags durchgeführt. Anschließend erfolgt eine Abfrage 20, ob optimale Korrektursignaleinstellungen für diesen Arbeitsauftrag vorliegen. Falls nicht, wird ein Fenster 21 geöffnet, in welchem entsprechende Korrektursignaleinstellungen vorgenommen werden können. In einem nachfolgenden Schritt erfolgt die Abfrage 22, ob bereits ein dem Arbeitsauftrag entsprechendes Arbeitsaggregat 6 konfiguriert worden ist. Falls nicht, wird ein Fenster 23 geöffnet, in welchem eine Konfiguration von Arbeitsaggregaten 6 erfolgen kann. In einem nachfolgenden Schritt erfolgt hier beispielsweise eine Abfrage 24, ob ein Geschwindigkeitssensor konfiguriert ist. Falls nicht, öffnet sich ein Fenster 25 zur Konfiguration eines Geschwindigkeitssensors. In einem nachfolgenden Schritt erfolgt dann die Abfrage 26, ob dem Fahrerassistenzsystem 3 bereits eine Fahrroute vorliegt. Falls nicht, wird die Bedienperson in einem Fenster 27 gefragt, ob eine Fahrroute geladen werden soll, beispielsweise von einer externen Datenquelle (zum Beispiel USB-Stick, Rechenzentrum). Es erfolgt dann eine entsprechende Abfrage 28, die, falls eine Fahrroute geladen werden soll, ein Fenster 29 öffnet, um eine entsprechende Fahrroute zu laden. Andernfalls öffnet sich ein Fenster 30, mit der die Bedienperson die Möglichkeit erhält, eine Fahrroute aufzuzeichnen. In einem dann nachfolgenden Schritt erfolgt die Abfrage 31, ob ein Vorgewendesequenz-Management konfiguriert ist. Falls nicht, öffnet sich ein Fenster 32, mit welchem ein Einrichtungsassistent für ein Vorgewendesequenz-Management gestartet wird.

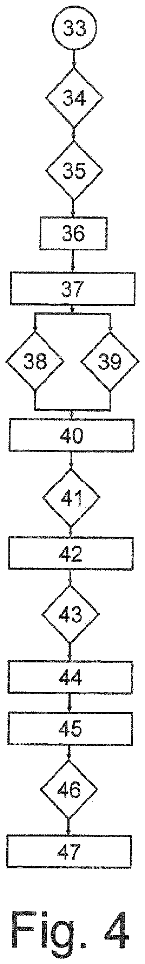

Die Einrichtung eines solchen Vorgewendesequenz-Managements wird beispielhaft anhand des Flussdiagramms in Fig. 4 erläutert. Nach dem Start 33 des Einrichtungsassistenten erfolgt zunächst die Abfrage 34, ob es sich vorliegend um einen landwirtschaftlichen Arbeitsauftrag handelt, der ein Vorgewendesequenz-Management benötigt. Anschließend erfolgt die Abfrage 35 des landwirtschaftlichen Arbeitsauftrags. Es öffnet sich dann ein Fenster 36, mit welchem abgefragt wird, ob die Bedienperson das Vorgewendesequenz-Management konfigurieren möchte. Anschließend öffnet sich ein Fenster 37, in welchem abgefragt wird, ob das Vorgewendesequenz-Management zeitabhängig oder wegabhängig konfiguriert werden soll. Die Bedienperson kann dann eine entsprechende Auswahl 38 oder 39 treffen. In einem sich dann öffnenden Fenster 40 wird die Bedienperson darauf hingewiesen, dass sie "Start" drücken kann, sobald sie mit einer entsprechenden Aufzeichnung einer Vorgewendesequenz beginnen möchte. Nach Betätigung 41 durch die Bedienperson erfolgt das Aufzeichnen der Vorgewendesequenz. Es erscheint dann ein Fenster 42, in dem die Bedienperson darauf hingewiesen wird, dass sie die Aufzeichnung stoppen kann, sobald sie dies wünscht. Eine Betätigung 43 stoppt die Aufzeichnung der Vorgewendesequenz dann entsprechend. Anschließend wird in einem Fenster 44 abgefragt, ob die zuvor aufgezeichnete Vorgewendesequenz noch editiert werden soll. Wiederum in einem nachfolgenden Fenster 45 wird abgefragt, wo und insbesondere auf welcher Funktionstaste die aufgezeichnete und ggfs. editierte Vorgewendesequenz gespeichert werden soll. Letztere Abfrage kann alternativ auch schon vor Beginn der Aufzeichnung erfolgen, das heißt Fenster 45 würde vor Fenster 40 angezeigt werden. Nach erfolgter Speicherung 46 wird die Bedienperson in einem sich dann öffnenden Fenster 47 gefragt, ob sie noch eine weitere Sequenz aufzeichnen möchte.

### Bezugszeichenliste

- 1: Landwirtschaftliche Arbeitsmaschine
- 2: Einrichtungsassistent
- 3: Fahrerassistenzsystem
- 4: Traktor
- 5: Feld
- 6: Arbeitsaggregat
- 7: Mähbalken
- 8: Parallele Fahrspuren
- 9: Vorgewende
- 10: Ω-förmige Fahrspur
- 11: Ein-/Ausgabeeinheit
- 12: Touchscreen
- 13: Mikroprozessor
- 14: Speicherpakete
- 15: Externe Datenquelle
- 16: GPS-oder Georeferenzsystem
- 17 - 32: Flussdiagramm-Elemente Einrichtung Fahrerassistenzsystem
- 33 - 47: Flussdiagramm-Elemente Einrichtung Sequenz-Management

## Patentansprüche

1. Landwirtschaftliche Arbeitsmaschine (1), insbesondere Traktor (4), mit einem Fahrerassistenzsystem (3), das eine Ein-/Ausgabeeinheit (11) zur Vorgabe eines landwirtschaftlichen Arbeitsauftrags wie Grund-/Bodenbearbeitung, Säen, Pflanzen, Pflanzenschutz, Düngen, Gülle und Dung, Ernten oder Stoppelsturz durch eine Bedienperson und zur Vornahme von den landwirtschaftlichen Arbeitsauftrag betreffenden Einstellungen durch die Bedienperson aufweist, wobei die Ein-/Ausgabeeinheit (11) die Einstellungen ermöglichende virtuelle Bedienelemente und den vorzunehmenden Einstellungen entsprechende Informationen anzeigt, **dadurch gekennzeichnet, dass** die Ein-/Ausgabeeinheit (11) einen Einrichtungsassistenten (2) umfasst, der derart eingerichtet ist, dass er der Bedienperson mittels der virtuellen Bedienelemente die Einrichtung des Fahrerassistenzsystems (3) ermöglicht, so dass der Einrichtungsassistent (2) in Abhängigkeit des von der Bedienperson vorgegebenen Arbeitsauftrags konfiguriert ist, wobei der Einrichtungsassistent (2) die Auswahl eines Arbeitsauftrags aus einer Gruppe von Arbeitsaufträgen durch die Bedienperson ermöglicht und basierend auf dem ausgewählten Arbeitsauftrag eine Grundkonfiguration des Fahrerassistenzsystems (3) vornimmt, wobei das Fahrerassistenzsystem (3) ein satellitengestütztes Lenksystem (3a), ein Sequenz-Managementsystem (3b), ein Section Control-System, ein System zur Steuerung und/oder Regelung einer elektronischen Deichsel, ein System zum autonomen Arbeiten und/oder ein Abstandskontrollsystem aufweist, das mit dem Einrichtungsassistenten (2) einrichtbar ist, wobei der Einrichtungsassistent (2) basierend auf dem ausgewählten Arbeitsauftrag eine Grundkonfiguration des Lenksystems (3a), Sequenz-Managementsystems (3b), Section Control-Systems, Systems zur Steuerung und/oder Regelung einer elektronischen Deichsel, Systems zum autonomen Arbeiten und/oder Abstandskontrollsystems vornimmt, wobei der Einrichtungsassistent (2) basierend auf der Grundkonfiguration mindestens eine Eingabemaske erzeugt, die von der Ein-/Ausgabeeinheit (11) angezeigt wird, wobei die mindestens eine Eingabemaske die Auswahl mindestens einer der Grundkonfiguration untergeordneten arbeitsauftragsspezifischen Einstellung zur rechnergestützten Planung einer Fahrroute und/oder einer Sequenz von Bedienschritten aus einer Gruppe von Einstellungen ermöglicht, und/oder, die Bestätigung mindestens einer vom Einrichtungsassistenten (2) vorgegebenen, der Grundkonfiguration untergeordneten arbeitsauftragsspezifischen Einstellung zur rechnergestützten Planung einer Fahrroute und/oder einer Sequenz von Bedienschritten ermöglicht.

2. Landwirtschaftliche Arbeitsmaschine (1) nach Anspruch 1, **dadurch gekennzeichnet, dass** als Arbeitsauftrag ein Arbeitsauftrag aus der Gruppe umfassend "Grund-/Bodenbearbeitung", "Säen", "Pflanzen", "Pflanzenschutz", "Düngen", "Gülle und Dung", "Ernten", "Stoppelsturz" und/oder eine Kombination daraus auswählbar und/oder von der Ein-/Ausgabeeinheit anzeigbar ist und/oder die Grundkonfiguration des Fahrerassistenzsystems (3) und/oder des Lenksystems (3a), Sequenz-Managementsystems (3b), Section Control-Systems, Systems zur Steuerung und/oder Regelung einer elektronischen Deichsel, Systems zum autonomen Arbeiten und/oder Abstandskontrollsystems definiert.

3. Landwirtschaftliche Arbeitsmaschine (1) nach Anspruch 1 oder 2, **dadurch gekennzeichnet, dass** als Arbeitsauftrag ein Arbeitsauftrag aus der Gruppe umfassend "Grünlandbewirtschaftung", "Ernten", "Grünlandpflege", "Silage" und/oder eine Kombination daraus auswählbar und/oder von der Ein-/Ausgabeeinheit (11) anzeigbar ist und/oder die Grundkonfiguration des Fahrerassistenzsystems (3) und/oder des Lenksystems (3a), Sequenz-Managementsystems (3b), Section Control-Systems, Systems zur Steuerung und/oder Regelung einer elektronischen Deichsel, Systems zum autonomen Arbeiten und/oder Abstandskontrollsystems definiert.

4. Landwirtschaftliche Arbeitsmaschine (1) nach einem der vorhergehenden Ansprüche, **dadurch gekennzeichnet, dass** als Arbeitsauftrag ein Arbeitsauftrag aus der Gruppe umfassend "Baustelle", "Materialhandhabung", "Forstarbeit", "Transport", "Kommunale Arbeiten" und/oder eine Kombination daraus auswählbar und/oder von der Ein-/Ausgabeeinheit (11) anzeigbar ist und/oder die Grundkonfiguration des Fahrerassistenzsystems (3) und/oder des Lenksystems (3a), Sequenz-Managementsystems (3b), Section Control-Systems, Systems zur Steuerung und/oder Regelung einer elektronischen Deichsel, Systems zum autonomen Arbeiten und/oder Abstandskontrollsystems definiert.

5. Landwirtschaftliche Arbeitsmaschine (1) nach einem der vorhergehenden Ansprüche, **dadurch gekennzeichnet, dass** als der Grundkonfiguration untergeordnete arbeitsauftragsspezifische Einstellung eine Einstellung aus der Gruppe umfassend eine Korrektursignaleinstellung, die Auswahl und/oder Konfiguration eines Arbeitsaggregats (6) zur Durchführung oder Unterstützung des landwirtschaftlichen Arbeitsauftrags, die Auswahl und/oder Konfiguration eines Geschwindigkeitssensors, die Auswahl und/oder Konfiguration eines Georeferenzsystems (16), die Auswahl und/oder Konfiguration einer Fahrroute und/oder die Auswahl und/oder Konfiguration einer Vorgewendesequenz auswählbar und/oder von der Ein-/Ausgabeeinheit (11) anzeigbar ist.

6. Landwirtschaftliche Arbeitsmaschine (1) nach einem der vorhergehenden Ansprüche, **dadurch gekennzeichnet, dass** der Einrichtungsassistent (2) für die jeweilige der Grundkonfiguration untergeordnete arbeitsauftragsspezifische Einstellung mehrere Auswahlmöglichkeiten anzeigt.

7. Landwirtschaftliche Arbeitsmaschine (1) nach Anspruch 5 oder 6, **dadurch gekennzeichnet, dass** als Arbeitsaggregat (6) ein für einen Arbeitsauftrag aus der Gruppe umfassend "Grund-/Bodenbearbeitung", "Säen", "Pflanzen", "Pflanzenschutz", "Düngen", "Gülle und Dung", "Ernten", "Stoppelsturz" und/oder eine Kombination daraus vorgesehenes Arbeitsaggregat (6) angezeigt wird.

8. Landwirtschaftliche Arbeitsmaschine (1) nach Anspruch 5 oder 6, **dadurch gekennzeichnet, dass** als Arbeitsaggregat (6) ein für einen Arbeitsauftrag aus der Gruppe umfassend "Grünlandbewirtschaftung", "Ernten", "Grünlandpflege", "Silage" und/oder eine Kombination daraus vorgesehenes Arbeitsaggregat (6) angezeigt wird.

9. Landwirtschaftliche Arbeitsmaschine (1) nach Anspruch 5 oder 6, **dadurch gekennzeichnet, dass** als Arbeitsaggregat (6) ein für einen Arbeitsauftrag aus der Gruppe umfassend "Baustelle", "Materialhandhabung", "Forstarbeit", "Transport", "Kommunale Arbeiten" und/oder eine Kombination daraus vorgesehenes Arbeitsaggregat (6) angezeigt wird.

10. Landwirtschaftliche Arbeitsmaschine (1) nach einem der Ansprüche 5 bis 9, **dadurch gekennzeichnet, dass** der Einrichtungsassistent (2) der Bedienperson ermöglicht, eine Fahrroute und/oder Sequenz von Bedienschritten von einer externen Datenquelle (15) zu laden und/oder eine solche aufzuzeichnen und/oder zu editieren.

11. Landwirtschaftliche Arbeitsmaschine (1) nach einem der vorhergehenden Ansprüche, **dadurch gekennzeichnet, dass** die Sequenz von Bedienschritten eine Vorgewendesequenz ist.

12. Landwirtschaftliche Arbeitsmaschine (1) nach einem der Ansprüche 1 bis 10, **dadurch gekennzeichnet, dass** die Ein-/Ausgabeeinheit (11) einen Touchscreen (12) aufweist, wobei der Einrichtungsassistent (2) die Auswahl des landwirtschaftlichen Arbeitsauftrags und/oder der arbeitsauftragsspezifischen Einstellung symbolbasiert und/oder bildbasiert und/oder textbasiert anzeigt.

## Claims

1. An agricultural working machine (1), in particular a tractor (4), having a driver assistance system (3) which has an input/output unit (11) for an operator to specify an agricultural operational assignment such as ground/soil working, sowing, planting, plant protection, fertilizing, slurry spreading, harvesting or stubble breaking and for the operator to make the adjustments relating to the agricultural operational assignment, wherein the input/output unit (11) displays virtual operating elements which allow the adjustments to be made and the information corresponding to the adjustments, **characterized in that** the input/output unit (11) comprises a set-up assistant (2) which is configured in a manner such that it enables the operator to set up the driver assistance system (3) using the virtual operating elements so that the set-up assistant (2) is configured as a function of the operational assignment specified by the operator, wherein the set-up assistant (2) allows the operator to select an operational assignment from a group of operational assignments and, based on the selected operational assignment, implements a basic configuration of the driver assistance system (3), wherein the driver assistance system (3) has a satellite-based steering system (3a), a sequence management system (3b), a section control system, a system for controlling and/or regulating an electronic tow bar, a system for autonomous operation and/or a distance monitoring system which can be set up with the set-up assistant (2), wherein, based on the selected operational assignment, the set-up assistant (2) implements a basic configuration of the steering system (3a), sequence management system (3b), section control system, system for controlling and/or regulating an electronic tow bar, system for autonomous operation and/or distance control system, wherein, based on the basic configuration, the set-up assistant (2) produces at least one input form which is displayed by the input/output unit (11), wherein the at least one input form allows at least one operational assignment-specific setting which is subordinate to the basic configuration to be selected for computer-aided planning of a travel route and/or a sequence of operating steps from a group of settings, and/or enables the confirmation of at least one operational assignment-specific setting which is subordinate to the basic configuration and specified by the set-up assistant (2) for the computer-aided planning of a travel route and/or a sequence of operating steps.

2. The agricultural working machine (1) according to claim 1, **characterized in that** an operational assignment selected from the group comprising "ground/soil working" "sowing", "planting", "plant protection", "fertilizing", "slurry spreading", "harvesting", "stubble breaking" and/or a combination thereof can be selected as the operational assignment and/or can be displayed by the input/output unit and/or defines the basic configuration of the driver assistance system (3) and/or of the steering system (3a), sequence management system (3b), section control system, system for controlling and/or regulating an electronic tow bar, system for autonomous operation and/or distance control system.

3. The agricultural working machine (1) according to claim 1 or claim 2, **characterized in that** an operational assignment from the group comprising "grassland management", "harvesting", "grassland care", "silage" and/or a combination thereof can be selected as the operational assignment and/or can be displayed by the input/output unit (11) and/or defines the basic configuration of the driver assistance system (3) and/or of the steering system (3a), sequence management system (3b), section control system, system for controlling and/or regulating an electronic tow bar, system for autonomous operation and/or distance control system.

4. The agricultural working machine (1) according to one of the preceding claims, **characterized in that** an operational assignment from the group comprising "construction site", "material handling", "forestry work", "transport", "municipal work" and/or a combination thereof can be selected as the operational assignment and/or can be displayed by the input/output unit (11) and/or defines the basic configuration of the driver assistance system (3) and/or of the steering system (3a), sequence management system (3b), section control system, system for controlling and/or regulating an electronic tow bar, system for autonomous operation and/or distance control system.

5. The agricultural working machine (1) according to one of the preceding claims, **characterized in that** a setting from the group comprising a correction signal setting, the selection and/or configuration of a working unit (6) for carrying out or supporting the agricultural operational assignment, the selection and/or configuration of a speed sensor, the selection and/or configuration of a georeferencing system (16), the selection and/or configuration of a travel route and/or the selection and/or configuration of a headland sequence can be selected and/or can be displayed by the input/output unit (11) as the operational assignment-specific setting which is subordinate to the basic configuration.

6. The agricultural working machine (1) according to one of the preceding claims, **characterized in that** the set-up assistant (2) displays a plurality of selection options for the respective operational assignment-specific setting which is subordinate to the basic configuration.

7. The agricultural working machine (1) according to claim 5 or claim 6, **characterized in that** a working unit (6) for an operational assignment from the group comprising "ground/soil working", "sowing", "planting", "plant protection", "fertilizing", "slurry spreading", "harvesting", "stubble breaking" and/or a combination thereof is displayed as the working unit (6).

8. The agricultural working machine (1) according to claim 5 or claim 6, **characterized in that** a working unit (6) for an operational assignment from the group comprising "grassland management", "harvesting", "grassland care", "silage" and/or a combination thereof is displayed as the working unit (6).

9. The agricultural working machine (1) according to claim 5 or claim 6, **characterized in that** a working unit (6) for an operational assignment from the group comprising "construction site", "material handling", "forestry work", "transport", "municipal work" and/or a combination thereof is displayed as the working unit (6).

10. The agricultural working machine (1) according to one of claims 5 to 9, **characterized in that** the set-up assistant unit (2) enables the operator to load a travel route and/or sequence of operating steps from an external data source (15) and/or to display and/or to edit it.

11. The agricultural working machine (1) according to one of the preceding claims, **characterized in that** the sequence of operating steps is a headland sequence.

12. The agricultural working machine (1) according to one of claims 1 to 10, **characterized in that** the input/output unit (11) comprises a touchscreen (12), wherein the set-up assistant (2) displays the selection of the agricultural operational assignment and/or the operational assignment-specific setting in a symbol-based and/or image-based and/or text-based manner.

## Revendications

1. Machine de travail agricole (1), en particulier tracteur (4), comprenant un système d'assistance au conducteur (3) qui comporte une unité d'entrée/sortie (11) pour prescrire une tâche agricole tel que travail de la terre/du sol, ensemencement, plantation, protection des végétaux, fertilisation, épandage de lisier et d'engrais, récolte ou déchaumage, par l'intermédiaire d'un opérateur et pour effectuer des réglages relatifs à la tâche agricole par l'intermédiaire de l'opérateur, l'unité d'entrée/sortie (11) affichant des éléments d'utilisation virtuels qui permettent les réglages et des informations qui correspondent aux réglages à effectuer, **caractérisée en ce que** l'assistant d'agencement (2) permet à l'opérateur de sélectionner une tâche parmi un groupe de tâches et, sur la base de la tâche sélectionnée, d'effectuer une configuration de base du système d'assistance au conducteur, le système d'assistance au conducteur (3) comportant un système de direction assisté par satellite (3a), un système de gestion séquentielle (3b), un système de coupure de tronçons, un système de commande et/ou de régulation d'un timon électronique, un système de travail autonome et/ou un système de contrôle de distance, qui est agençable avec l'assistant d'agencement (2), l'assistant d'agencement (2) permettant à l'opérateur de sélectionner une tâche parmi un groupe de tâches et, sur la base de la tâche sélectionnée, effectuant une configuration de base du système de direction (3a), du système de gestion séquentielle (3b), du système de coupure de tronçons, du système de commande et/ou de régulation d'un timon électronique, du système de travail autonome et/ou du système de contrôle de distance, l'assistant d'agencement (2) générant sur la base de la configuration de base au moins un masque d'entrée qui est affiché par l'unité d'entrée/sortie (11), le au moins un masque d'entrée permettant de sélectionner au moins un réglage spécifique à la tâche, subordonné à la configuration de base, en vue d'une planification assistée par ordinateur d'un itinéraire et/ou d'une séquence d'étapes opératoires parmi un groupe de réglages, et/ou permettant de confirmer au moins un réglage spécifique à la tâche, subordonné à la configuration de base, prescrit par l'assistant d'agencement (2) en vue d'une planification assistée par ordinateur d'un itinéraire et/ou d'une séquence d'étapes opératoires.

2. Machine de travail agricole (1) selon la revendication 1, **caractérisée en ce que,** à titre de tâche, une tâche parmi le groupe incluant « travail de la terre/du sol », « ensemencement », « plantation », « protection des végétaux », « fertilisation », « épandage de lisier et d'engrais », « récolte », « déchaumage » et/ou une combinaison de ceux-ci peut être sélectionnée et/ou peut être affichée par l'unité d'entrée/sortie et/ou définit la configuration de base du système d'assistance au conducteur (3) et/ou du système de direction (3a), du système de gestion séquentielle (3b), du système de coupure de tronçons, du système de commande et/ou de régulation d'un timon électronique, du système de travail autonome et/ou du système de contrôle de distance.

3. Machine de travail agricole (1) selon la revendication 1 ou 2, **caractérisée en ce que,** à titre de tâche, une tâche parmi le groupe incluant « exploitation des herbages », « récolte », « entretien des herbages », « ensilage » et/ou une combinaison de ceux-ci peut être sélectionnée et/ou affichée par l'unité d'entrée/sortie (11) et/ou définit la configuration de base du système d'assistance au conducteur (3) et/ou du système de direction (3a), du système de gestion séquentielle (3b), du système de coupure de tronçons, du système de commande et/ou de régulation d'un timon électronique, du système de travail autonome et/ou du système de contrôle de distance.

4. Machine de travail agricole (1) selon une des revendications précédentes, **caractérisée en ce que,** à titre de tâche, une tâche parmi le groupe incluant « chantier », « manutention », « travaux forestiers », « transport », « travaux communaux » et/ou une combinaison de ceux-ci peut être sélectionnée et/ou affichée par l'unité d'entrée/sortie (11) et/ou définit la configuration de base du système d'assistance au conducteur (3) et/ou du système de direction (3a), du système de gestion séquentielle (3b), du système de coupure de tronçons, du système de commande et/ou de régulation d'un timon électronique, du système de travail autonome et/ou du système de contrôle de distance.

5. Machine de travail agricole (1) selon une des revendications précédentes, **caractérisée en ce que,** à titre de réglage spécifique à la tâche, subordonné à la configuration de base, un réglage parmi le groupe incluant un réglage de signal correctif, la sélection et/ou la configuration d'un organe de travail (6) pour réaliser ou assister la tâche agricole, la sélection et/ou la configuration d'un capteur de vitesse, la sélection et/ou la configuration d'un système de géoréférence (16), la sélection et/ou la configuration d'un itinéraire et/ou la sélection et/ou la configuration d'une séquence de tournière peut être sélectionné et/ou affiché par l'unité d'entrée/sortie (11) .

6. Machine de travail agricole (1) selon une des revendications précédentes, **caractérisée en ce que,** pour le réglage respectif spécifique à la tâche, subordonné à la configuration de base, l'assistant d'agencement (2) affiche plusieurs possibilités de sélection.

7. Machine de travail agricole (1) selon la revendication 5 ou 6, **caractérisée en ce que,** à titre d'organe de travail (6), un organe de travail (6) prévu pour une tâche parmi le groupe incluant « travail de la terre/du sol », « ensemencement », « plantation », « protection des végétaux », « fertilisation », « épandage de lisier et d'engrais », « récolte », « déchaumage » et/ou une combinaison de ceux-ci est affiché.

8. Machine de travail agricole (1) selon la revendication 5 ou 6, **caractérisée en ce que,** à titre d'organe de travail (6), un organe de travail (6) prévu pour une tâche parmi le groupe incluant « exploitation des herbages », « récolte », « entretien des herbages », « ensilage » et/ou une combinaison de ceux-ci est affiché.

9. Machine de travail agricole (1) selon la revendication 5 ou 6, **caractérisée en ce que,** à titre d'organe de travail (6), un organe de travail (6) prévu pour une tâche parmi le groupe incluant « chantier », « manutention », « travaux forestiers », « transport », « travaux communaux » et/ou une combinaison de ceux-ci est affiché.

10. Machine de travail agricole (1) selon une des revendications 5 à 9, **caractérisée en ce que** l'assistant d'agencement (2) permet à l'opérateur de charger un itinéraire et/ou une séquence d'étapes opératoires à partir d'une source de données externe (15) et/ou d'enregistrer et/ou de modifier ceux-ci.

11. Machine de travail agricole (1) selon une des revendications précédentes, **caractérisée en ce que** la séquence d'étapes opératoires est une séquence de tournière.

12. Machine de travail agricole (1) selon une des revendications 1 à 10, **caractérisée en ce que** l'unité d'entrée/sortie (11) comporte un écran tactile (12), l'assistant d'agencement (2) affichant la sélection de la tâche agricole et/ou du réglage spécifique à la tâche sur la base de symboles et/ou d'images et/ou de texte.
